# EUROPEAN PATENT SPECIFICATION

(11) **EP 2 853 136 B1**
(45) Date of publication and mention of the grant of the patent: **17.04.2019**
(21) Application number: 12877303.3
(22) Date of filing: 23.05.2012
(51) Int. Cl.: H04M 1/725

(54) **PORTABLE ELECTRONIC DEVICES HAVING A SEPARATE LOCATION TRIGGER UNIT FOR USE IN CONTROLLING AN APPLICATION UNIT**
TRAGBARE ELEKTRONISCHE VORRICHTUNGEN MIT SEPARATER POSITIONSAUSLÖSEEINHEIT ZUR VERWENDUNG BEI DER STEUERUNG EINES ANWENDUNGSEINHEIT
DISPOSITIFS ÉLECTRONIQUES PORTABLES À UNITÉ DE DÉCLENCHEMENT À EMPLACEMENT SÉPARÉ DESTINÉE À ÊTRE UTILISÉE DANS LA COMMANDE D'UNE UNITÉ D'APPLICATION

(43) Date of publication of application: 01.04.2015
(73) Proprietor: Hand Held Products, Inc., Fort Mill, SC 29707 (US)
(72) Inventor: BIAN, Lei, Morristown, New Jersey 07962-2245 (US); ZHANG, Zhenjun, Morristown, New Jersey 07962-2245 (US); YIN, Jian, Morristown, New Jersey 07962-2245 (US)
(74) Representative: Houghton, Mark Phillip
(86) International application number: PCT/CN2012/075937
(87) International publication number: WO 2013/173985

(56) References cited:
- EP-A2- 2 648 462
- CN-A- 102 223 595
- CN-U- 201 733 441
- US-A1- 2011 207 509
- US-B1- 6 907 254

## Description

### FIELD OF THE INVENTION

The present invention relates generally to portable electronic devices, and in particular to portable electronic devices having a separate location trigger unit for use in controlling an application unit.

### BACKGROUND OF THE INVENTION

Portable electronic devices, such as wireless and cellular telephones, are well known. Various attempts have been made in connection with changing the operating mode and the managing the power consumption of the portable electronic devices.

For example, U.S. Patent Application Publication No. 2007/0037610 by Logan discloses methods and apparatus for conserving battery power in a cellular or portable telephone. The cellular telephone automatically places itself in a sleep mode in which one or more components are de-energized to conserve battery power whenever sensed status variables indicated that the telephone will not or cannot be used. The user can schedule time periods during which the phone will be in sleep mode and can establish conditional rules which establish conditions which, if satisfied, will place the phone in a sleep mode. Sensed variables such as ambient light and sound, the time of day, applied pressure, and the location and movement of the phone are processed along with user-defined preference values to begin and end automated sleep modes.

U.S. Patent No. 6,907,254 issued to Westfield discloses a method and apparatus for controlling a quiet zone for wireless units. Entry of a cellular phone device into an area of restricted phone access ("quiet zone") is detected and an IP message identifying the phone sent to a central facility. In one embodiment, an IP message is sent to the phone causing it to change behavior, for example turning off the volume on the ringer. Alternatively, the central facility can process an incoming call for a phone that is determined to be in a quiet zone to reduce intrusion in the quiet zone, for example, it can send the call to a phone mailbox or give the caller a busy signal.

U.S. Patent No. 8,041,968 issued to Tupman discloses systems and methods for efficiently managing power consumption in portable electronic devices. In one embodiment, power management circuitry may operate the device in a low power mode (e.g., a HIBERNATION mode), but enables the device to quickly become fully operational in response to a power-ON event, despite having been in that low power mode. The power management may be implemented in a device including an application portion and a carrier portion. The carrier portion can include circuitry for performing telephone functions (e.g., transmitting data to and receiving data from a communications tower). The application portion may include all other circuitry not specifically reserved for the carrier circuitry. In the low power mode, both the application and carrier portions may be in a low power mode. The power management circuitry may periodically activate the carrier portion (or predetermined circuitry within the carrier portion) to enable it to, for example, determine whether an incoming signal (e.g., telephone call or text message) is being received. If an incoming signal is being received, this may trigger a power-ON event that causes the power management circuitry to switch the media device from a low power mode to an ON mode. If no incoming signal is detected, the power management circuitry may deactivate the carrier portion, allowing it to return to a low power mode.

U.S. Patent No. 7,398,061 issued to Mousseau discloses a method and apparatus for changing the behavior of an electronic device. In an embodiment, an electronic device includes the functionality of a cellular phone, a voice mail system, and a calendar application. The device is configured to use the calendar application to determine whether to direct a phone call to the user or whether to instantly direct the call to voice mail.

U.S. Patent No. 2011/207509A1 describes enhanced battery conservation in mobile devices. In one or more embodiments, a mobile computing device may include a processor and a battery to supply power to the processor. The device stores user pattern data and/or user preference data. The device further includes a power management module coupled to the processor. The power management module monitors a location of the device, wireless signal strength, and date/time. The power management module also monitors and analyzes user operation of the device to identify scenarios in which wireless communications can be suspended. The power management module suspends wireless communication according to these monitored conditions, and analyzed user operations, to reduce battery consumption.

There is a need for further portable electronic devices, and in particular to portable electronic devices having a separate location trigger unit for use in controlling an application unit.

### SUMMARY OF THE INVENTION

The present invention in its various aspects is as set out in the appended claims.

In a first aspect, the present invention provides a portable electronic device having a housing, a receiver operably coupled to the housing for receiving data regarding a physical location of the portable electronic device, a location trigger unit, and an application unit. The location trigger unit is operably coupled to the housing and to the receiver, and the location trigger unit comprises a first processor. The application unit is operably coupled to the housing and to the location trigger unit, and comprises a second processor. The application unit comprises a plurality of operating modes. The location trigger unit, based on the physical location of the portable electronic device, is operable to at least one of effect a) changing the operating mode of the application unit, and b) turning on and off the second processor of the application unit.

In a second aspect, the present invention provides a method for operating a portable electronic device based on physical location of the portable electronic device. The method includes obtaining data regarding a physical location of the portable electronic device in a location trigger unit comprising a first processor operably connected to an application unit comprising a second processor, and at least one of operably effecting, based on the physical location of the portable electronic device and in response to the location trigger unit, a) changing the operating mode of the application unit, and b) turning on and off the second processor of the application unit.

### BRIEF DESCRIPTION OF THE DRAWINGS

The subject matter which is regarded as the invention is particularly pointed out and distinctly claimed in the concluding portion of the specification. The invention, however, may best be understood by reference to the following detailed description of various embodiments and the accompanying drawings in which:
FIG. 1 illustrates a diagrammatic illustration of one embodiment of a portable electronic device in accordance with aspects of the present invention;
FIG. 2 is an enlarged front side elevational view of one embodiment of the portable electronic device of FIG. 1;
FIG. 3 is a rear side elevational view of the portable electronic device of FIG. 2;
FIG. 4 is a block diagram of the portable electronic device of FIG. 1;
FIG. 5 is a flowchart illustrating one embodiment of a method for operating the portable electronic device of FIG. 1 based on physical location of the portable electronic device;
FIG. 6 illustrates a flowchart of one embodiment of a method for monitoring the physical location of the portable electronic device in accordance with aspects of the present invention; and
FIG. 7 illustrates a flowchart of one embodiment of a trigger management method employed in the portable electronic device of FIG. 1 in accordance with aspects of the present invention.

### DETAILED DESCRIPTION OF THE INVENTION

Reference will now be made in detail to the present invention, examples of which are illustrated in the accompanying drawings, wherein like reference numerals refer to like elements throughout. The following description will use nomenclature associated with portable electronic devices, however those of ordinary skill in the art will recognize that the present invention is applicable to a variety of portable electronic devices such as cell phones, mobile phones, satellite phones, telemetric devices, personal data assistants (PDAs), and other portable and hand held devices.

As described in greater detail below, the present invention is generally directed to portable electronic devices in which an operating profile of the portable electronic device is automatically changed based on a physical location of the portable electronic device. For example, an application unit of the portable electronic device may be automatically changed from one operating mode to another operating mode based on the physical location of the portable electronic device, and/or the application unit may be powered on or off based on the physical location of the portable electronic device. Such portable electronic devices of the present invention allow a user to automatically adapt or tailor the operation of the portable electronic device for the user and/or reduce the power consumption or prolong the life of the battery before it must be recharged.

Conventionally, portable phones require a user to switch the phone profile typically manually everyday and often numerous times during the day. For example, with portable phones, a user may desire that a portable phone be set to a vibrate mode or silent mode when in an office, but desire the portable phone to be ring mode when the user is at home. If the user forgets switch the profile to ring mode at home, the user may miss the phone call or a morning/event alarm. The present invention, by employing a location trigger unit or receiving location data from, for example, a global positioning system, the portable electronic device using operable programming may poll or sample the GPS location information. When the location of the portable electronic device enters a predefined physical location or range, the portable electronic device can switch the profile automatically.

In addition, the portable electronic device maybe operable to turn off the power to certain modules or devices in the portable electronic device. For example, a user can define some actions for a location such as turning off a camera so that when the device enters a location or within a range of a location, the software in the portable electronic device can effect these actions.

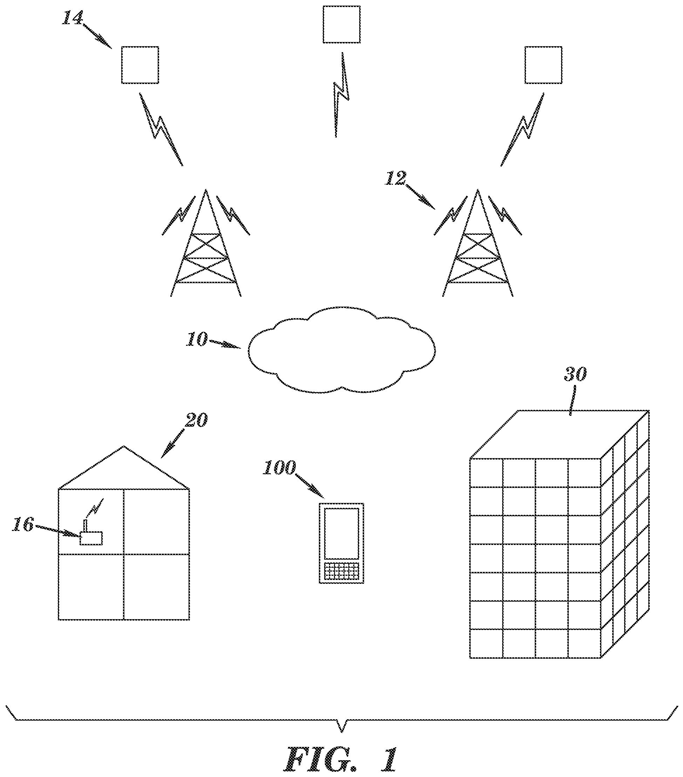

FIG. 1 illustrates a diagrammatic illustration of one embodiment of a portable electronic device 100 in accordance with aspects of the present invention. In this illustrated embodiment, portable electronic device 100 such as mobile phones, cell phones, smart phones, etc. usable by customers may be operably connectable to a communications network such as a global communications network 10, e.g., the Internet, a cellular telephone network 12, a wireless local area network via a wireless modem 16, or other suitable networks. As explained in greater detail below, portable electronic device 100 may be operable to receive position location data from global positioning satellites 14, cellular telephone network 12, and/or wireless modem 16, and operably change or modify the operating profile of the portable electronic device such as when the user is in a home 20, office 30, or other locations.

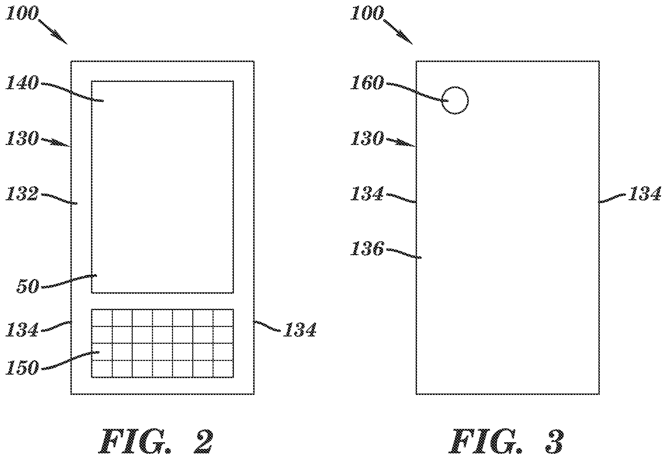

As shown in FIGS. 2 and 3, portable electronic device 100 may include a housing 130 having a front surface 132 (FIG. 2), side surfaces 134, and a rear surface 136 (FIG. 3). With reference to FIG. 2, portable electronic device 100 may further include a display screen 140 such as a backlit LED or LCD display. The display may also be an electronic paper display such as an e-paper display, electronic ink display, and other displays that mimic the appearance of ordinary ink on paper. Unlike conventional backlit flat panel displays, electronic paper displays reflect ambient light like ordinary paper rather than emitting its own light. A keyboard 150 enabling the input of data may also be disposed on front side 132 of housing 130. In another embodiment, the display may be a backlit LED or LCD touch screen display comprising a display and a touch sensitive overlay disposed over the display. In this manner, the display screen operates as a data input interface. A camera 160 (FIG. 3) may be disposed on the backside of the housing. Housing 130 may also support a variety of components, including a battery typically located in the rear half of the body.

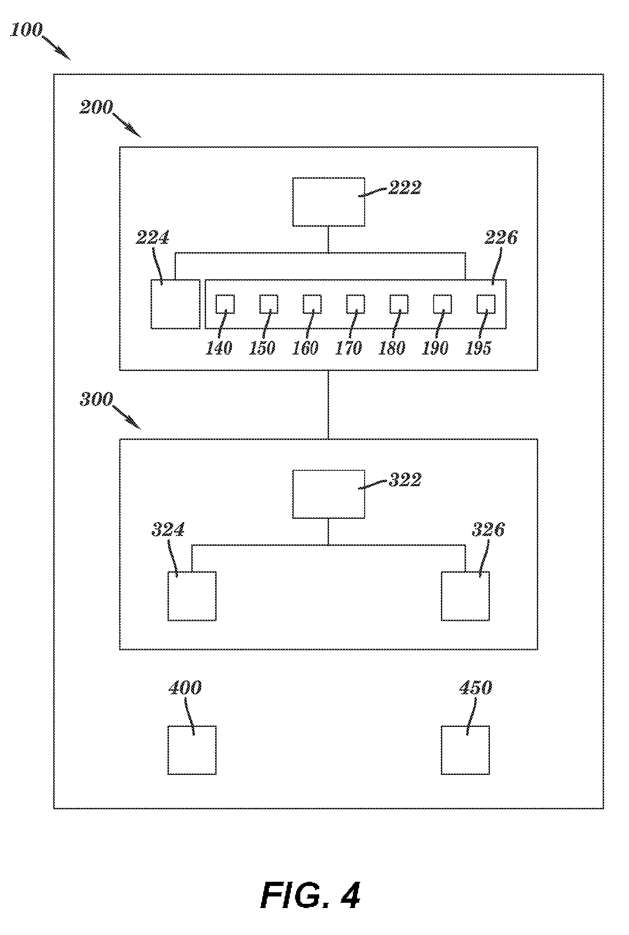

As shown in FIG. 4, portable electronic device 100 may include, for example, an application unit 200 and a location trigger unit 300. Application unit 200 and location trigger unit 300 may be powered by a battery 400, such as the units may be separately connected and powered by the battery.

Application unit 200 may include a computing unit or processor 222, one or more data storage units 224 such as memory or a memory card, and one or more input/output devices 226. In one embodiment, portable electronic device 100 may be a configured as a portable phone, and application unit 200 may be operably connectable to a cellular network provided by a mobile phone operator, allowing access to the public telephone network. Input/output devices 226 may include display 140, keyboard 150, camera 160, a microphone 170, a speaker 180, an antenna 190, a wireless network receiver 195 such as a WiFi, Bluetooth, or other wireless network receiver, and other devices.

Location trigger unit 300 may include a computing unit or processor 322, one or more data storage units 324 such as memory or a memory card, and one or more input/output devices 326. Location trigger unit 300 may be operably connected to a receiver 450, e.g., a suitable antenna or other detecting device, for receiving position data from an external positioning system. For example, location trigger unit 300 of the portable electronic device may be operable for obtaining data from global positioning system 14 (FIG. 1). The position location unit may be, in one embodiment, operable to receive signals from a series of satellites which may be satellites of a Global Positioning System (GPS). For example, each satellite may include an atomic clock and reports time-stamped signals to receiver 450. With a timing system that includes atomic clocks in each orbiting satellite, location trigger unit 300 may determine a distance from location trigger unit 300 to a transmitting satellite. When the location trigger unit receives signals from three satellites, location trigger unit 300 may determine a location (x and y coordinates) of portable electronic device 100. In determining a location of portable electronic device 100, location trigger unit 300 may determine its present distance from each of three satellites and extracts location information utilizing triangulation. Portable electronic device 100 may alternatively determine the physical location and time operably using a cellular network (e.g., using antenna 190 as a receiver), or a combination of GPS and cellular network such as an Assisted GPS or AGPS. Suitable position locating devices and units include GPS, cellular systems, and other systems that are disclosed in U.S. Patent Application Publication No. 2010/0217723 by Sauerwein, Jr. et al., the entire contents of which are incorporated herein by reference.

In addition, the portable electronic devices may employ wireless local area network (WLAN) based positioning using WLAN access points (such as in a home, office, or store) based on WiFi signals to determine the location of the portable electronic device. The approximate range to an access point can be determined by measuring the power level of the WiFi beacon transmission, since signal power decreases approximately with the square of the distance. In addition, Wi-Fi Positioning System (WPS) may be combined with cell phone tower triangulation and GPS to provide reliable and accurate position data under a wide range of conditions, including among tall buildings and indoors, when GPS signals may be weak or intermittent. It will be appreciated that other systems and methods for determining the physical location of the portable electronic device may be suitably employed. For example, antenna 190 or other device typically employed with the application unit may be employed as a receiver in place of receiver 450, possibly eliminating the need for a separate receiver 450.

With reference still to FIG. 4, location trigger unit 300 may be operable to allow a user to set and store associated location and profile data for application unit 200. For example, location trigger unit 300 may include suitable software programming employing a look-up table, list, or other data structure stored in memory 324 for automatically performing various operations or triggering events in response to the sensed or detected physical location of portable electronic device 100. In addition, the location and profile data may be further associated with time and date data for automatically changing the operating profile of the portable electronic device.

For example, a user may set or associate desired profile data for the application unit, such as ring or vibrate mode, silent mode, sleep mode, turning on or off the application unit, and turning on and off various modules of the application unit such as a camera, and location data such as being at a location, within a certain range of a location, or other sensed conditions such as availability of WiFi, cell phone service, etc. The desired profiles may also be associated with times such as the time of a day or days of the week, month, or year, and associated with the location data or without the location data. In use, when a condition or precondition is met, the location trigger unit is operable to effect the desired profile in the application unit. The user may access a setup routine such as menus or have suggested options displayed on display 140 (FIG. 2) for setting up the desired profiles in the location trigger unit. In addition, the portable electronic device may be operable to learn or detect user desired profiles and suggest or propose triggering events.

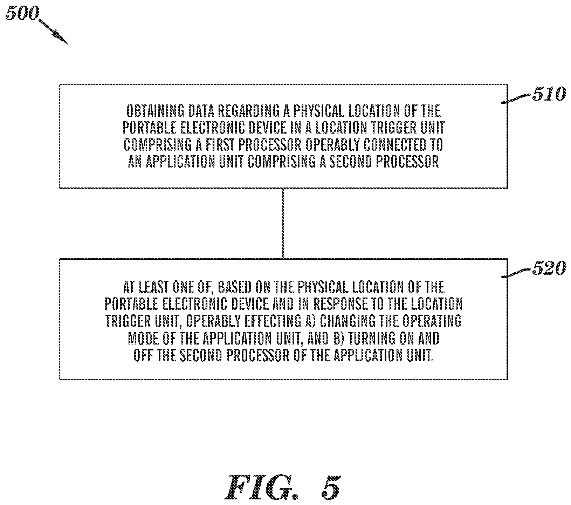

FIG. 5 illustrates a flowchart of one embodiment of a method 500 for operating a portable electronic device based on physical location of the electronic device in accordance with aspects of the present invention. Method 500 may include at 510, obtaining data regarding a physical location of the portable electronic device in a location trigger unit comprising a first processor operably connected to an application unit comprising a second processor, and at 520, at least one of operably effecting, based on the physical location of the portable electronic device and in response to the location trigger unit, a) changing the operating mode of the application unit, and b) turning on and off the second processor of the application unit.

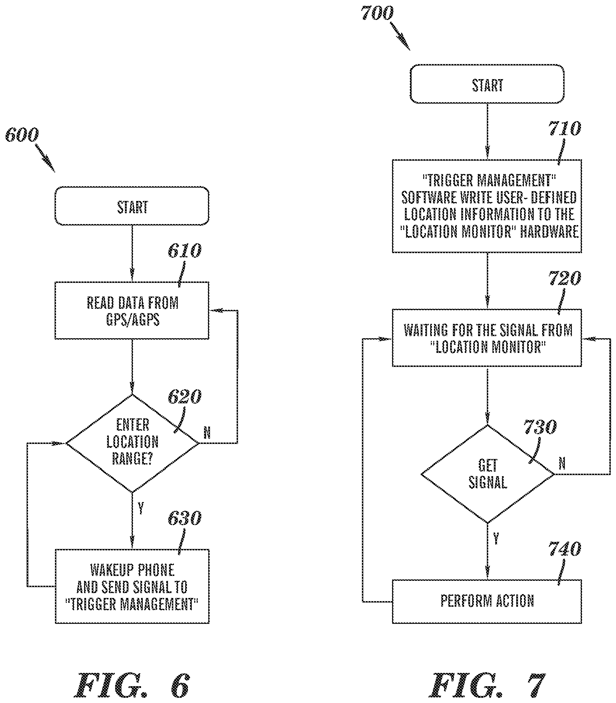

FIG. 6 illustrates one embodiment of a flowchart of a method 600 for monitoring the physical location of the portable electronic device in accordance with aspects of the present invention. For example, at 610, data from a receiver regarding physical location of the portable electronic device is read such as data from a global positioning system, a cellular phone network, and/or a wireless local area network. At 620, the data may be compared to a predetermined range or predetermined value to determine if the portable electronic device has, for example, entered a location range. If not, the data from the receiver is read again. If the portable electronic device has entered the location range, at 630, the location trigger unit may wake up the application unit and send one or more signals to a trigger management software for changing the profile of the application unit. For example, the location trigging unit may include a trigger management, e.g., user programmed associated location data and profile data as described above.

FIG. 7 illustrates one embodiment for a flowchart of a trigger management method 700 employed in the portable electronic device in accordance with aspects of the present invention. For example, at 710, trigger management software may write user defied location information to the location trigger unit hardware. At 720, the location trigger unit waits for a signal such as the signal generated at 630 (FIG. 6). If a sign is not received, the location trigger unit waits again at 720. If a signal is received at 730, an action at 740 is performed based on the trigger management software. For example, one or more signals sent to effect a change in the operating profile of the application unit.

The configuration of the portable electronic device of the present invention provides a separate location trigger unit that controls an application unit so that the application unit may be turned off to allow the portable electronic device to have a lower power consumption of the battery compared to a portable electronic device where the application unit is used and powered for polling or determining the location of the portable electronic device (e.g., waking up the whole system and periodically polling and processing location data).

The processor or MCU used in the location trigger unit may have a first normal operating power consumption level, and the separate processor or MCU used in the application unit may have a second normal operating power consumption level greater than the first normal operating power consumption level of the processor or MCU in the location trigger unit. For example, the processor or MCU for the location unit may be a low end processor such as an 8bit or 16bit MCU, so that its power consumption is low. Desirably, the processor or MCU may consume only about 1% to about 10% of the application unit processor or MCU. Accordingly, the reduced consumption by the location trigger unit would consume less power and extend the battery life, compared to using a single processor or MCU in the portable electronic device. For example, in the portable electronic device configured as a portable phone, a suitable processor for use in the application unit may be processor model no. OMAP3530, available from Texas Instruments. A suitable processor for use in the location trigger unit may be processor model no. MSP430, available from Texas Instruments.

The present invention may be implemented in many configurations. For example, users may configure a portable phone to automatically change profiles so that the portable phone is in a vibrate or silent mode when they are in office, and in ring mode when they are at home, and avoid forgetting to switch the profile to ring mode at home or missing a phone call or a morning/event alarm.

In addition, typically there are many modules in portable electronic devices such as in portable phones. Some aspects of the present invention may include disabling and enabling different components based on different locations. For example, some of the modules may not be needed in some areas, however they are typically still working and consuming battery resources. To save battery power, the present invention allows turning off a WiFi, Bluetooth, etc. modules when in not in or in a limited wireless network, or turning off GPRS/3G Data-Service, sensors, etc. modules depending on the physical location of the device.

In another example, WiFi/BT/GPRS/3G data service may be disabled or turned off when the user enters an office. For example, in some companies, a camera may be disabled when a user brings the portable electronic device into a security area like research and development department or warehouse.

From the present description, it will be appreciated that aspects of the present invention may include setting the device, e.g., application unit, to sleep mode to save power. In other aspects, the application unit of the portable electronic device may run an application or play a ringtone to notify the user. For example, the portable electronic device may be made to vibrate and play a ringtone if user enters a supermarket to notify him to buy something.

## Claims

1. A portable electronic device (100) comprising:
a housing (130);
a receiver (190, 450) operably coupled to said housing for receiving data regarding a physical location of said portable electronic device;
a location trigger unit (300) operably coupled to said housing and to said receiver, said location trigger unit comprising a first processor (322);
an application unit (200) operably coupled to said housing and to said location trigger unit, and comprising a second processor (222), said application unit comprising a plurality of operating modes; and
wherein said location trigger unit (300) is user programmable to allow a user to set and store associated location and profile data, and based on the physical location of said portable electronic device, is operable to a) effect changing said operating mode of said application unit based on the profile data associated with the physical location of said portable electronic device set by the user, and b) turning on or off said second processor of said application unit based on the profile data associated with the physical location of said portable electronic device set by the user.

2. The portable electronic device of claim 1 wherein said first processor (322) comprises a first normal operating power consumption level, and said second processor (222) comprises a second normal operating power consumption level greater than said first power consumption level.

3. The portable electronic device of claim 1 further comprising at least one auxiliary device operably connected to said application unit, and wherein said portable electronic device is operable based on said location trigger unit to effect turning on and off said at least one auxiliary device.

4. The portable electronic device of claim 1 wherein said application unit comprises a portable phone, and wherein said location trigger unit, based on the physical location of said portable electronic device, is operable to effect changing said operating mode of said application unit from a ring mode to a silent or vibrate mode.

5. A method (500) for operating a portable electronic device (100) based on physical location of the portable electronic device, the method comprising:
storing associated location and profile data in a location trigger unit (300);
obtaining (510) data regarding a physical location of the portable electronic device in the location trigger unit (300) comprising a first processor (322) operably connected to an application unit (200) comprising a second processor (222); and
operably effecting (520), based on the physical location of the portable electronic device and in response to the location trigger unit, a) changing the operating mode of the application unit based on the profile data associated with the physical location of said portable electronic device, and b) turning on or off the second processor of the application unit based on the profile data associated with the physical location of said portable electronic device.

6. The method of claim 5 wherein the first processor (322) comprises a first normal operating power consumption level, and the second processor (222) comprises a second normal operating power consumption level greater than the first power consumption level.

7. The method of claim 5 wherein the location trigger unit (300) is user programmable to allow a user to set and store associated location data and profile data.

8. The method of claim 5 further comprising turning on and off at least one auxiliary device based on the physical location of the portable electronic device and in response to the location trigger unit.

## Patentansprüche

1. Tragbare elektronische Vorrichtung (100), umfassend:
ein Gehäuse (130);
einen Empfänger (190, 450), der mit dem Gehäuse betriebsfähig gekoppelt ist, zum Empfangen von Daten, die eine physische Position der tragbaren elektronischen Vorrichtung betreffen;
eine Positionsauslöseeinheit (300), die mit dem Gehäuse und mit dem Empfänger betriebsfähig gekoppelt ist, wobei die Positionsauslöseeinheit einen ersten Prozessor (322) umfasst;
eine Anwendungseinheit (200), die mit dem Gehäuse und mit der Positionsauslöseeinheit betriebsfähig gekoppelt ist und einen zweiten Prozessor (222) umfasst, wobei die Anwendungseinheit mehrere Betriebsmodi umfasst; und wobei die Positionsauslöseeinheit (300) benutzerprogrammierbar ist, um einem Benutzer zu ermöglichen, einander zugeordnete Positions- und Profildaten einzustellen und zu speichern, und basierend auf der physischen Position der tragbaren elektronischen Vorrichtung dafür ausgelegt ist, a) eine Änderung des Betriebsmodus der Anwendungseinheit basierend auf den vom Benutzer eingestellten Profildaten, die der physischen Position der tragbaren elektronischen Vorrichtung zugeordnet sind, zu bewirken, und b) den zweiten Prozessor der Anwendungseinheit basierend auf den vom Benutzer eingestellten Profildaten, die der physischen Position der tragbaren elektronischen Vorrichtung zugeordnet sind, ein- oder auszuschalten.

2. Tragbare elektronische Vorrichtung nach Anspruch 1, wobei der erste Prozessor (322) ein erstes Energieverbrauchsniveau bei normalem Betrieb aufweist und der zweite Prozessor (222) ein zweites Energieverbrauchsniveau bei normalem Betrieb aufweist, das höher als das erste Energieverbrauchsniveau ist.

3. Tragbare elektronische Vorrichtung nach Anspruch 1, welche ferner wenigstens eine Hilfsvorrichtung umfasst, die mit der Anwendungseinheit betriebsfähig verbunden ist, und wobei die tragbare elektronische Vorrichtung dafür ausgelegt ist, basierend auf der Positionauslöseeinheit ein Ein- und Ausschalten der wenigstens einen Hilfsvorrichtung zu bewirken.

4. Tragbare elektronische Vorrichtung nach Anspruch 1, wobei die Anwendungseinheit ein Mobiltelefon umfasst und wobei die Positionsauslöseeinheit dafür ausgelegt ist, basierend auf der physischen Position der tragbaren elektronischen Vorrichtung eine Änderung des Betriebsmodus der Anwendungseinheit von einem Klingelmodus zu einem Stumm- oder Vibrationsmodus zu bewirken.

5. Verfahren (500) zum Betreiben einer tragbaren elektronischen Vorrichtung (100) basierend auf der physischen Position der tragbaren elektronischen Vorrichtung, wobei das Verfahren umfasst:
Speichern einander zugeordneter Positions- und Profildaten in einer Positionsauslöseeinheit (300);
Gewinnen (510) von Daten, die eine physische Position der tragbaren elektronischen Vorrichtung betreffen, in der einen ersten Prozessor (322) umfassenden Positionsauslöseeinheit (300), die mit einer einen zweiten Prozessor (222) umfassenden Anwendungseinheit (200) betriebsfähig verbunden ist; und
operatives Bewirken (520), basierend auf der physischen Position der tragbaren elektronischen Vorrichtung und in Reaktion auf die Positionsauslöseeinheit, a) einer Änderung des Betriebsmodus der Anwendungseinheit basierend auf den Profildaten, die der physischen Position der tragbaren elektronischen Vorrichtung zugeordnet sind, und b) des Ein- oder Ausschaltens des zweiten Prozessors basierend auf den Profildaten, die der physischen Position der tragbaren elektronischen Vorrichtung zugeordnet sind.

6. Verfahren nach Anspruch 5, wobei der erste Prozessor (322) ein erstes Energieverbrauchsniveau bei normalem Betrieb aufweist und der zweite Prozessor (222) ein zweites Energieverbrauchsniveau bei normalem Betrieb aufweist, das höher als das erste Energieverbrauchsniveau ist.

7. Verfahren nach Anspruch 5, wobei die Positionauslöseeinheit (300) benutzerprogrammierbar ist, um einem Benutzer zu ermöglichen, einander zugeordnete Positionsdaten und Profildaten einzustellen und zu speichern

8. Verfahren nach Anspruch 5, welches ferner das Ein- und Ausschalten wenigstens einer Hilfsvorrichtung basierend auf der physischen Position der tragbaren elektronischen Vorrichtung und in Reaktion auf die Positionauslöseeinheit umfasst.

## Revendications

1. Dispositif électronique portable (100) comprenant :
un boîtier (130) ;
un récepteur (190, 450) couplé fonctionnellement audit boîtier pour recevoir des données concernant une position physique dudit dispositif électronique portable ;
une unité de déclenchement de position (300) couplée fonctionnellement audit boîtier et audit récepteur, ladite unité de déclenchement de position comprenant un premier processeur (322) ;
une unité d'application (200) couplée fonctionnellement audit boîtier et à ladite unité de déclenchement de position, et comprenant un second processeur (222), ladite unité d'application comprenant une pluralité de modes de fonctionnement ; et
dans lequel ladite unité de déclenchement de position est programmable par l'utilisateur pour permettre à un utilisateur d'établir et de mémoriser des données de position et de profil associées, et exploitable, en fonction de la position physique dudit dispositif électronique portable, pour a) effectuer un changement dudit mode de fonctionnement de ladite unité d'application en fonction des données de profil associées à la position physique dudit dispositif électronique portable établies par l'utilisateur, et b) mettre en marche et arrêter ledit second processeur de ladite unité d'application en fonction des données de profil associées à la position physique dudit dispositif électronique portable établies par l'utilisateur.

2. Dispositif électronique portable selon la revendication 1 dans lequel ledit premier processeur (322) comprend un premier niveau de consommation de puissance opérationnelle normal, et ledit second processeur (222) comprend un second niveau de consommation de puissance opérationnelle normal supérieur audit premier niveau de consommation de puissance.

3. Dispositif électronique portable selon la revendication 1 comprenant en outre au moins un dispositif auxiliaire connecté fonctionnellement à ladite unité d'application, et dans lequel ledit dispositif électronique portable est exploitable en fonction de ladite unité de déclenchement de position pour effectuer la mise en marche et l'arrêt dudit au moins un dispositif auxiliaire.

4. Dispositif électronique portable selon la revendication 1 dans lequel ladite unité d'application comprend un téléphone portable, et dans lequel ladite unité de déclenchement de position, en fonction de la position physique dudit dispositif électronique portable, est exploitable pour effectuer un changement dudit mode de fonctionnement de ladite unité d'application d'un mode de sonnerie à un mode muet ou un mode vibrations.

5. Procédé (500) de fonctionnement d'un dispositif électronique portable (100) en fonction de la position physique du dispositif électronique portable, le procédé comprenant :
la mémorisation de données de position et de profil associées dans une unité de déclenchement de position (300) ;
l'obtention (510) de données concernant une position physique du dispositif électronique portable dans l'unité de déclenchement de position (300) comprenant un premier processeur (322) connecté fonctionnellement à une unité d'application (200) comprenant un second processeur (222) ; et
l'exécution fonctionnelle (520), en fonction de la position physique du dispositif électronique portable et en réponse à l'unité de déclenchement de position, a) d'un changement du mode de fonctionnement de l'unité d'application en fonction des données de profil associées à la position physique dudit dispositif électronique portable, et b) d'une mise en marche et d'un arrêt du second processeur de l'unité d'application en fonction des données de profil associées à la position physique dudit dispositif électronique portable.

6. Procédé selon la revendication 5 dans lequel le premier processeur (322) comprend un premier niveau de consommation de puissance opérationnelle normal, et le second processeur (222) comprend un second niveau de consommation de puissance opérationnelle normal supérieur au premier niveau de consommation de puissance.

7. Procédé selon la revendication 5 dans lequel l'unité de déclenchement de position (300) est programmable par l'utilisateur pour permettre à un utilisateur d'établir et de mémoriser des données de position et des données de profil associées.

8. Procédé selon la revendication 5 comprenant en outre la mise en marche et l'arrêt d'au moins un dispositif auxiliaire en fonction de la position physique du dispositif électronique portable et en réponse à l'unité de déclenchement de position.
